# FASCICULE DE BREVET EUROPEEN

(11) **EP 0 760 295 B1**
(45) Date de publication et mention de la délivrance du brevet: **29.09.1999**
(21) Numéro de dépôt: 96401653.9
(22) Date de dépôt: 24.07.1996
(51) Int. Cl.: B60B 33/02

(54) **Chariot comprenant un bâti monté sur dispositifs à roulette pivotante, et dispositif à roulette pivotante en particulier pour un tel chariot**
Wagen mit einem auf Lenkrollen montierten Gestell und Lenkrollen für solchen Wagen
Cart comprising a frame mounted on castor wheels, and castor wheels for such cart

(30) Priorité: 01.09.1995 FR 9510310
(43) Date de publication de la demande: 05.03.1997
(73) Titulaire: ATELIERS REUNIS CADDIE, 67301 Schiltigheim (FR)
(72) Inventeur: Joseph, Alice, 67300 Schiltigheim (FR); Le Marchand, Alain, 67116 Reichstett (FR)
(74) Mandataire: CABINET BONNET-THIRION

(56) Documents cités:
- EP-A- 0 424 234
- GB-A- 2 222 362
- GB-A- 2 278 655
- GB-A- 2 279 242
- GB-A- 2 286 523
- PATENT ABSTRACTS OF JAPAN vol. 7, no. 20 (M-188), 26 Janvier 1983 & JP-A-57 175403 (NATSUO MORITA), 28 Octobre 1982,

## Description

L'invention est relative à un chariot du genre de ceux qui comprennent un bâti monté sur dispositifs à roulette pivotante, deux dispositifs au moins étant prévus à une première extrémité du chariot, ces deux dispositifs à roulette pivotante étant situés respectivement de part et d'autre de l'axe longitudinal moyen du chariot.

De tels chariots sont utilisés, notamment, dans les magasins libre-service par les acheteurs pour le transport de leurs emplettes, ou dans les gares et aérogares par les voyageurs pour le transport de leurs bagages.

Lorsque toutes les roulettes du chariot sont pivotantes, on peut facilement faire tourner le chariot sur lui-même, mais il devient plus délicat de le maintenir en ligne droite lorsqu'il est chargé. Lorsque des roulettes prévues à l'une des extrémités du chariot ont une orientation fixe convenable, le chariot garde bien sa trajectoire en ligne droite, mais il est moins facile de le faire tourner dans un espace réduit.

On a donc cherché à concilier ces deux impératifs contradictoires. Diverses solutions ont été proposées. Par exemple EP-A-0 424 234 (correspondant au préambule des revendications 1 et 9) concerne un dispositif à roulette pivotante pour chariot comportant un moyen de blocage du pivotement de la roulette pour un trajet en ligne droite, ce moyen de blocage pouvant être mis en service ou hors service. Lorsque le moyen de blocage est en service, il empêche tout pivotement de la roulette, en vue d'un trajet en ligne droite. Il est possible pour l'utilisateur de mettre hors service ce moyen de blocage et de rendre à nouveau la roulette pivotante, mais pour ce faire l'utilisateur doit effectuer un mouvement en sens inverse de celui en cours. Les moyens permettant de réaliser le déblocage comprennent un organe de frottement appliqué en permanence contre la roulette.

Une telle solution, tout en offrant l'avantage d'un bon suivi de trajectoire en ligne droite avec les roulettes bloquées en pivotement, présente cependant des inconvénients. En effet, pour obtenir la mise hors service du moyen de blocage, il faut que l'utilisateur effectue une opération peu pratique, puisqu'il doit inverser le sens de progression du chariot. En outre, un frottement permanent a lieu contre la roulette, ce qui constitue un frein à la progression du chariot et engendre une usure localisée de la roulette.

L'invention a pour but, surtout, de fournir un chariot qui conserve bien sa trajectoire en ligne droite tout en pouvant tourner dans de bonnes conditions, sans nécessiter des manoeuvres particulières de l'utilisateur et dans lequel les roulettes ne sont pas soumises à un frottement permanent.

Selon l'invention, un chariot du genre défini précédemment, dans lequel chacun des dispositifs à roulette pivotante de la première extrémité comporte un moyen de blocage du pivotement de la roulette, est caractérisé par le fait que le moyen de blocage de chaque roulette, de la dite première extrémité du chariot, est à action unilatérale et est propre à laisser la roulette libre de pivoter dans un sens, suivant une amplitude suffisante, et à bloquer le pivotement dans l'autre sens, les sens de blocage étant opposés pour les deux roulettes de la première extrémité du chariot situées de part et d'autre de l'axe longitudinal moyen du chariot.

De préférence, les dispositifs à roulette pivotante munis d'un tel moyen de blocage à action unilatérale sont les dispositifs à roulette arrière, considérés suivant le sens normal de progression du chariot. Les roulettes arrière sont généralement montées pivotantes autour d'un axe vertical décalé longitudinalement vers l'avant par rapport à l'axe de rotation de la roulette ; de préférence pour une telle configuration, le moyen de blocage de chaque roulette arrière est propre à bloquer tout pivotement de la roulette vers l'extérieur, à partir de la position normale des roulettes arrière dans une progression en ligne droite du chariot, et à laisser libre un pivotement vers l'intérieur, au moins sur une plage angulaire suffisante.

Le moyen de blocage à action unilatérale de chaque roulette est avantageusement agencé pour permettre un pivotement complet sur un ou plusieurs tours de la roulette dans le sens autorisé.

Le moyen de blocage à action unilatérale d'une roulette comprend, de préférence, un doigt lié en pivotement à la roulette et situé au-dessus de celle-ci, ce doigt s'étendant sensiblement orthogonalement à la direction du pivot et pouvant s'engager dans une échancrure ménagée dans un rebord d'une coupelle retournée, fixe par rapport au bâti et située au-dessus de la roulette, l'une des extrémités de l'échancrure formant une butée d'arrêt du doigt.

Avantageusement le fond de l'échancrure comporte une rampe qui, en s'éloignant de la butée d'arrêt, descend progressivement pour rejoindre le contour inférieur du rebord de la coupelle et permettre le passage du doigt. Ce doigt est avantageusement articulé sur une tige orthogonale à la direction de l'axe de pivotement, située à distance radiale du dit axe de pivotement, entre cet axe de pivotement et le rebord de la coupelle, et un moyen élastique est prévu pour appliquer le doigt contre le fond de l'échancrure.

Le moyen élastique est avantageusement constitué par un ressort de compression, en particulier placé coaxialement à l'axe de pivotement, prenant appui à une extrémité contre une partie fixée au bâti du chariot et, à son autre extrémité, contre la zone intérieure du doigt.

L'invention concerne également un dispositif à roulette pivotante pour chariot, en particulier pour un chariot tel que défini précédemment, comprenant :
- une roulette montée rotative autour d'un axe porté par une chape ;
- un pivot orthogonal à l'axe de la roulette et décalé par rapport à cet axe, la chape et la roulette pouvant s'orienter autour du pivot, et
- un moyen de blocage du pivotement.

Un tel dispositif à roulette selon l'invention est caractérisé par le fait que le moyen de blocage du pivotement est à action unilatérale et est propre à laisser la roulette libre de pivoter dans un sens, sur une amplitude suffisante, et à bloquer le pivotement dans l'autre sens.

De préférence, le moyen de blocage à action unilatérale est agencé pour permettre un pivotement complet sur un ou plusieurs tours de la roulette dans le sens autorisé. Ce moyen de blocage peut comprendre un doigt lié en pivotement à la roulette et situé au-dessus de celle-ci, ce doigt s'étendant sensiblement orthogonalement à la direction du pivot et s'engageant dans une échancrure ménagée dans le rebord d'une coupelle retournée fixe par rapport au bâti du chariot et située au-dessus de la roulette, l'une des extrémités de cette échancrure formant une butée d'arrêt du doigt. L'échancrure présente avantageusement une rampe telle que définie précédemment et le doigt est sollicité par un moyen élastique tel que défini précédemment.

L'invention consiste mises à part les dispositions exposées ci-dessus, en un certain nombre d'autres dispositions dont il sera plus explicitement question ci-après à propos d'un exemple de réalisation décrit avec références au dessin ci-annexé mais qui n'est nullement limitatif.
La figure 1, de ce dessin, est une vue en perspective de la partie inférieure d'un chariot conforme à l'invention.
La figure 2 est une vue en perspective, à plus grande échelle, avec partie arrachée et partie en coupe, d'un dispositif à roulette selon l'invention, correspondant à une roulette arrière du chariot de la figure 1.
La figure 3 est une vue partielle de face, à plus grande échelle de la partie supérieure du dispositif à roulette de la figure 2, certains éléments ayant été coupés ou arrachés.
La figure 4, enfin, est une épure illustrant un mouvement de rotation du chariot.

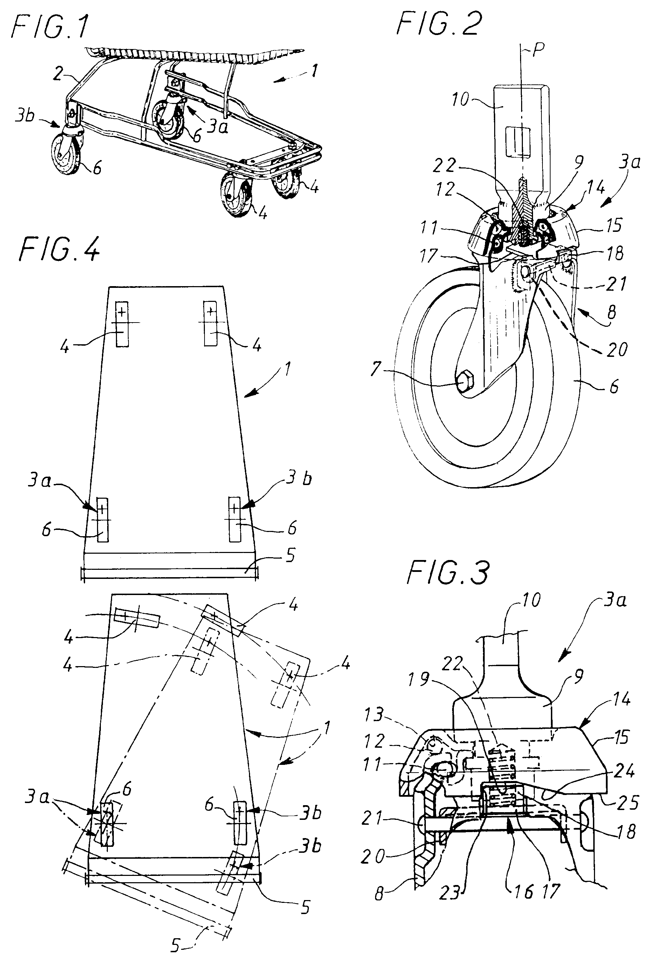

En se reportant au dessin, notamment à la figure 1, on peut voir la partie inférieure d'un chariot 1 tel que ceux utilisés dans les magasins libre-service, comprenant un bâti 2 monté sur des dispositifs à roulette pivotante. Au moins deux dispositifs à roulette pivotante 3a, 3b sont prévus à une première extrémité du chariot, à savoir, dans l'exemple illustré, l'extrémité arrière considérée dans le sens de progression normal du chariot. Un dispositif à roulette 3a, 3b est prévu de chaque côté du plan longitudinal vertical moyen du chariot 1. Deux autres dispositifs à roulette pivotante 4 sont prévus à l'extrémité avant du chariot.

Le chariot 1 est destiné normalement à être poussé à l'aide d'une barre supérieure transversale horizontale 5 (figure 4), située à l'arrière de la partie supérieure du chariot. L'arrière et l'avant dont il est question dans cette description sont considérés par rapport au sens de progression obtenu lorsque l'on pousse le chariot à partir de la barre 5. Il est clair cependant que le chariot 1 peut être tiré à l'aide de la barre 5, au lieu d'être poussé, le sens de déplacement du chariot étant alors opposé au sens de progression normal.

Le dispositif à roulette 3a est situé sur la gauche du chariot, pour le sens de progression normal, tandis que le dispositif 3b est situé sur la droite. La description qui suit sera faite à propos du dispositif 3a. La description du dispositif 3b s'en déduira comme expliqué plus loin.

Le dispositif à roulette 3a comprend une roulette proprement dite 6 montée rotative autour d'un axe 7 porté par une chape 8 à deux joues coiffant la roulette 6. La chape 8 est montée tournante autour d'un pivot 9 solidaire d'une patte 10 de fixation au bâti du chariot 1. L'axe géométrique P du pivot est l'axe de pivotement.

Le montage rotatif de la chape 8 sur le pivot fixe 9 est assuré à l'aide de deux couronnes à billes 11, 12. La couronne à billes supérieure 12 est logée dans une rainure 13, formant chemin de roulement, prévue dans le fond d'une coupelle 14 retournée, fixée au pivot 9. Cette coupelle 14 comporte un rebord 15 tourné vers le bas. L'axe géométrique du pivot 9 est orthogonal à l'axe de la roulette 7 et est décalé par rapport à cet axe 7. La chape 8 et la roulette peuvent s'orienter autour du pivot 9. Lorsque le chariot roule sur un sol horizontal, le pivot 9 est vertical tandis que l'axe 7 est horizontal.

Le dispositif à roulette pivotante 3a, selon l'invention, comporte un moyen de blocage 16 du pivotement à action unilatérale. Le moyen de blocage 16 est propre à laisser la roulette 6 libre de pivoter dans un sens sur une amplitude suffisante, et à bloquer le pivotement dans l'autre sens.

Comme visible sur les figures 2 et 3, le moyen de blocage 16 de la roulette 6 comprend un doigt 17 lié en pivotement à la chape 8 et donc à la roulette 6, et situé au-dessus de cette roulette. Le doigt 17 est formé par une sorte de lamelle s'étendant sensiblement orthogonalement à la direction du pivot 9, au-dessous de celui-ci, l'extrémité radiale extérieure de la lamelle 17 étant recourbée à 90° vers le haut pour former un bec 18 propre à s'engager dans une échancrure 19 prévue dans le rebord 15 de la coupelle 14.

Le doigt 17 comporte, légèrement en retrait dans le sens radial par rapport au bec 18, deux extensions transversales munies à leur extrémité d'une oreille 20 rabattue vers le bas, voisine de la surface intérieure d'une joue de la chape 8. Une tige d'articulation 21, parallèle à l'axe 7, traverse des trous prévus respectivement dans les joues de la chape 8 et dans les oreilles 20.

Un moyen élastique constitué par un ressort de compression 22 est prévu pour appliquer le bec 18 du doigt contre le fond de l'échancrure 19. Le ressort 22 est avantageusement disposé coaxialement au pivot 9 dans un trou borgne débouchant sur la face transversale inférieure du pivot 9. Le ressort 22 est en appui, à son extrémité supérieure, contre le fond du trou borgne, c'est-à-dire contre le pivot 9 fixé au bâti du chariot, tandis que l'autre extrémité, à savoir l'extrémité inférieure, du ressort 22 est en appui contre la zone intérieure du doigt 17. Comme on le voit, l'action du ressort 22, par suite de l'articulation autour de la tige 21, a tendance à soulever le bec 18.

Une extrémité 23 de l'échancrure 19 forme une butée d'arrêt pour le doigt 17. Cette extrémité 23 est constituée par un bord vertical propre à coopérer avec un bord vertical conjugué du bec 18 de sorte que l'effort de retenue du doigt 17, par la coupelle 14, ne crée aucune composante verticale vers le bas susceptible d'abaisser le doigt 17.

Par contre, vers l'autre extrémité, le fond de l'échancrure 19 comporte une rampe 24 qui, en s'éloignant de la butée d'arrêt 23, descend progressivement pour rejoindre le contour inférieur 25 du rebord de la coupelle 14.

Ainsi, la chape 8 et la roulette 6 peuvent pivoter dans le sens pour lequel le bec 18 vient s'appuyer contre la rampe 24. Il en résulte un abaissement progressif de l'extrémité extérieure du doigt 17 jusqu'à ce qu'elle vienne en contact avec le bord inférieur 25. La roulette 6 peut poursuivre son mouvement de pivotement sur un tour complet, le bec 18 entrant à nouveau dans l'échancrure 19, sous l'action du ressort 22, lorsqu'il a complètement franchi l'extrémité 23. La roulette 6 peut ainsi effectuer plusieurs tours de pivotement dans le sens autorisé.

Dans l'exemple représenté sur les figures 2 et 3, l'échancrure 19 est prévue du côté avant de la coupelle 14 et la butée d'arrêt 23, pour la roulette arrière droite 6, est située à l'extrémité gauche selon la figure 3, de l'échancrure 19, c'est-à-dire à l'extrémité intérieure de cette échancrure.

Dans le sens normal de progression, l'axe 7 se trouve en arrière du pivot 9, de sorte que le blocage réalisé par la butée d'arrêt 23 empêche, dans l'exemple représenté, tout pivotement de la chape 8 et de la roulette 6 vers l'extérieur, qui correspondrait à un déplacement du bec 18 vers la gauche de la figure 3. Par contre la roulette 6 peut pivoter vers l'intérieur ce qui correspond à un déplacement du bec 18 vers la droite de la figure 3 avec rencontre de la rampe 24.

L'autre dispositif à roulette 3b est agencé également pour que la roulette arrière droite 6 puisse pivoter vers l'intérieur et soit bloquée vers l'extérieur. Ceci se traduit au niveau de l'agencement de la coupelle 14 de cet autre dispositif 3b par une échancrure 19 tournée en sens opposé à celui illustré sur la figure 3, c'est-à-dire que, vue de l'avant, la butée d'arrêt 23 pour le dispositif 3b se trouve sur la droite tandis que la rampe 24 se trouve sur la gauche du bec 18 du doigt. Les autres éléments du dispositif à roulette 3b sont semblables à ceux décrits à propos de la figure 3.

Le fonctionnement du chariot selon l'invention est le suivant.

Lorsque l'utilisateur pousse le chariot 1 en ligne droite, les dispositifs à roulette arrière 3a, 3b prennent leur position d'avance en ligne droite pour laquelle le bec 18 du doigt 17 associé à la roulette se trouve dans l'échancrure 19, en appui contre la butée 23. La roulette 6 ne s'écarte pas de cette position car, d'un côté, elle est complètement bloquée par la butée 23, tandis que, de l'autre, l'action conjuguée de la rampe 24 et du ressort 22 agissant sur le levier 17 assure le retour de la roulette dans la position d'avance en ligne droite ; cette action se combine avec l'effet produit par l'angle de chasse de la roulette.

Ainsi, l'avance en ligne droite du chariot 1 est assurée dans de bonnes conditions, même si ce chariot est lourdement chargé.
Lorsque l'utilisateur veut faire tourner le chariot 5, par exemple vers la gauche comme illustré sur la figure 4, la roulette arrière droite pourra tourner vers l'intérieur ce qui facilite le mouvement de rotation du chariot sans que l'utilisateur ait à effectuer une manoeuvre visant à débloquer le pivotement de la roulette arrière droite. Dans le cas où un utilisateur déplacerait le chariot 1 dans le sens contraire au sens normal, c'est-à-dire en exerçant une traction sur la barre 5, les roulettes 6 pourraient effectuer un demi-tour en pivotement et devenir roulettes avant pivotantes permettant un déplacement satisfaisant du chariot dans ce sens inverse au sens normal.

## Revendications

1. Chariot comprenant un bâti (2) monté sur dispositifs à roulette pivotante, deux dispositifs (3a,3b) au moins étant prévus à une première extrémité du chariot, ces deux dispositifs à roulette pivotante (3a,3b) étant situés respectivement de part et d'autre de l'axe longitudinal moyen du chariot (1), chacun des dispositifs à roulette (3a,3b) de la première extrémité comportant un moyen de blocage (16) du pivotement de la roulette (6), caractérisé par le fait que le moyen de blocage (16) de chaque roulette (6), de la dite première extrémité du chariot, est à action unilatérale et est propre à laisser la roulette (6) libre de pivoter dans un sens, suivant une amplitude suffisante, et à bloquer le pivotement dans l'autre sens, les sens de blocage étant opposés pour les deux roulettes de la première extrémité du chariot situées de part et d'autre de l'axe longitudinal moyen du chariot .

2. Chariot selon la revendication 1, caractérisé par le fait que les dispositifs à roulette pivotante (3a,3b) munis d'un moyen de blocage à action unilatérale (16) sont les dispositifs à roulette arrière, considérés suivant le sens normal de progression du chariot.

3. Chariot selon la revendication 2 dans lequel les roulettes arrière sont montées pivotantes autour d'un axe vertical décalé longitudinalement vers l'avant par rapport à l'axe de rotation de la roulette caractérisé par le fait que le moyen de blocage (16) de chaque roulette arrière est propre à bloquer tout pivotement de la roulette (6) vers l'extérieur, à partir de la position normale des roulettes arrière dans une progression en ligne droite du chariot, et à laisser libre un pivotement vers l'intérieur, au moins sur une plage angulaire suffisante.

4. Chariot selon l'une des revendications précédentes, caractérisé par le fait que le moyen de blocage à action unilatérale (16) de chaque roulette (6) est agencé pour permettre un pivotement complet sur un ou plusieurs tours de la roulette dans le sens autorisé.

5. Chariot selon l'une des revendications précédentes, caractérisé par le fait que le moyen de blocage à action unilatérale (16) d'une roulette (6) comprend un doigt (17) lié en pivotement à la roulette (6) et situé au-dessus de celle-ci, ce doigt (17) s'étendant sensiblement orthogonalement à la direction du pivot (9) et pouvant s'engager dans une échancrure (19) ménagée dans un rebord (15) d'une coupelle retournée (14), fixe par rapport au bâti (2) et située au-dessus de la roulette, l'une (23) des extrémités de l'échancrure (19) formant une butée d'arrêt du doigt (17).

6. Chariot selon la revendication 5, caractérisé par le fait que le fond de l'échancrure (19) comporte une rampe (24) qui, en s'éloignant de la butée d'arrêt (23), descend progressivement pour rejoindre le contour inférieur (25) du rebord de la coupelle et permettre le passage du doigt.

7. Chariot selon la revendication 6, caractérisé par le fait que le doigt (17) est articulé sur une tige (21) orthogonale à la direction de l'axe de pivotement (P), située à distance radiale du dit axe de pivotement, entre cet axe de pivotement (P) et le rebord (15) de la coupelle, et un moyen élastique (22) est prévu pour appliquer le doigt contre le fond de l'échancrure.

8. Chariot selon la revendication 7, caractérisé par le fait que le moyen élastique est constitué par un ressort de compression (22), en particulier placé coaxialement à l'axe de pivotement (P), prenant appui à une extrémité contre une partie (9) fixée au bâti du chariot et, à son autre extrémité, contre la zone intérieure du doigt (17).

9. Dispositif à roulette pour chariot, en particulier pour un chariot selon l'une des revendications 1 à 8, comprenant :
- une roulette (6) montée rotative autour d'un axe (7) porté par une chape (8) ;
- un pivot (9) orthogonal à l'axe de la roulette et décalé par rapport à cet axe, la chape et la roulette pouvant s'orienter autour du pivot, et
- un moyen de blocage du pivotement (16),
caractérisé par le fait que le moyen de blocage du pivotement (16) est à action unilatérale et est propre à laisser la roulette (6) libre de pivoter dans un sens, sur une amplitude suffisante, et à bloquer le pivotement dans l'autre sens.

10. Dispositif à roulette selon la revendication 9, caractérisé par le fait que le moyen de blocage à action unilatérale (16) de chaque roulette (6) est agencé pour permettre un pivotement complet sur un ou plusieurs tours de la roulette dans le sens autorisé.

11. Dispositif à roulette selon la revendication 9 ou 10, caractérisé par le fait que le moyen de blocage à action unilatérale (16) d'une roulette (6) comprend un doigt (17) lié en pivotement à la roulette (6) et situé au-dessus de celle-ci, ce doigt (17) s'étendant sensiblement orthogonalement à la direction du pivot (9) et pouvant s'engager dans une échancrure (19) ménagée dans un rebord (15) d'une coupelle retournée (14), fixe par rapport au pivot (9) et située au-dessus de la roulette, l'une (23) des extrémités de l'échancrure (19) formant une butée d'arrêt du doigt (17).

12. Dispositif à roulette selon la revendication 11, caractérisé par le fait que le fond de l'échancrure (19) comporte une rampe (24) qui, en s'éloignant de la butée d'arrêt (23), descend progressivement pour rejoindre le contour inférieur (25) du rebord de la coupelle et permettre le passage du doigt.

13. Dispositif à roulette selon la revendication 11 ou 12, caractérisé par le fait que le doigt (17) est articulé sur une tige (21) orthogonale à la direction de l'axe de pivotement (P), située à distance radiale du dit axe de pivotement, entre cet axe de pivotement (P) et le rebord (15) de la coupelle, et un moyen élastique (22) est prévu pour appliquer le doigt contre le fond de l'échancrure.

14. Dispositif à roulette selon la revendication 13, caractérisé par le fait que le moyen élastique est constitué par un ressort de compression (22), en particulier placé coaxialement à l'axe de pivotement (P), prenant appui à une extrémité contre une partie (9) fixée au bâti du chariot et, à son autre extrémité, contre la zone intérieure du doigt (17).

## Claims

1. A trolley comprising a frame (2) mounted on pivoting castor means, at least two means (3a,3b) being provided at a first end of the carriage, these two pivoting castor means (3a,3b) being disposed respectively on either side of the central longitudinal axis of the trolley (1), each of the castor means (3a,3b) of the first end comprising a means (16) for blocking the pivotal movement of the castor (6), characterised in that the blocking means (16) for each castor (6) of said first end of the carriage acts unilaterally and is adapted to leave the castor (6) free to pivot in one direction, to a sufficient extent, and to block the pivotal movement in the other direction, the blocking directions being opposed for the two castors of the first end of the trolley disposed on either side of the central longitudinal axis of the trolley.

2. A trolley according to claim 1, characterised in that the pivoting castor means (3a,3b) provided with a unilaterally acting blocking means (16) are the rear castor means, viewed in accordance with the normal direction of forward movement of the trolley.

3. A trolley according to claim 2, in which the rear castors are mounted to pivot about a vertical axis which is offset longitudinally towards the front in relation to the axis of rotation of the castor, characterised in that the blocking means (16) of each rear castor is adapted to block any outward pivotal movement of the castor (6), starting from the normal position of the rear castors in a forward movement of the trolley in a straight line, and to leave free inward pivoting at least over an adequate angular range.

4. A trolley according to any one of the preceding claims, characterised in that the unilaterally acting blocking means (16) for each castor (6) is arranged to allow full pivoting through one or more revolutions of the castor in the permitted direction.

5. A trolley according to any one of the preceding claims, characterised in that the unilaterally acting blocking means (16) for a castor (6) comprises a pin (17) pivotally connected to the castor (6) and disposed above the latter, said pin (17) extending substantially orthogonally to the direction of the pivot (9) and being able to engage in an indentation (19) provided in a rim (15) of an inverted cup (14), which is fixed in relation to the frame (2) and which is disposed above the castor, one (23) of the ends of the indentation (19) forming a stop member for the pin (17).

6. A trolley according to claim 5, characterised in that the bottom of the indentation (19) comprises a ramp (24) which, as it extends away from the stop member (23), descends progressively so as to rejoin the inner contour (25) of the rim of the cup and allow the pin to pass.

7. A trolley according to claim 6, characterised in that the pin (17) is articulated on a rod (21) arranged orthogonal to the direction of the pivot axis (P), which is situated at a radial distance from said pivot axis, between this pivot axis (P) and the rim (15) of the cup, and an elastic means (22) is provided to apply the pin against the bottom of the indentation.

8. A trolley according to claim 7, characterised in that the elastic means comprises a compression spring (22), in particular disposed coaxially to the pivot axis (P), bearing at one end against a fixed part (9) of the trolley frame, and at its other end against the inner zone of the pin (17).

9. A castor means for a trolley, in particular for a trolley according to any one of claims 1 to 8, comprising:
- a castor (6) mounted to rotate about a spindle (7) carried by a fork (8);
- a pivot (9) arranged orthogonal to the axis of the castor and offset in relation to this axis, the fork and the castor being able to turn about the pivot, and
- a means (16) for blocking pivotal movement,
characterised in that the means (16) for blocking pivotal movement acts unilaterally and is adapted to leave the castor (6) free to pivot in one direction, to a sufficient extent, and to block the pivotal movement in the other direction,

10. A castor means according to claim 9, characterised in that the unilaterally acting blocking means (16) for each castor (6) is arranged to allow full pivoting through one or more revolutions of the castor in the permitted direction.

11. A castor means according to claim 9 or 10, characterised in that the unilaterally acting blocking means (16) for a castor (6) comprises a pin (17) pivotally connected to the castor (6) and disposed above the latter, said pin (17) extending substantially orthogonally to the direction of the pivot (9) and being able to engage in an indentation (19) provided in a rim (15) of an inverted cup (14), which is fixed in relation to the pivot (9) and which is disposed above the castor, one of the ends (23) of the indentation (19) forming a stop member for the pin (17).

12. A castor means according to claim 11, characterised in that the bottom of the indentation (19) comprises a ramp (24) which, as it extends away from the stop member (23), descends progressively so as to rejoin the inner contour (25) of the rim of the cup and allow the pin to pass.

13. A castor means according to claim 11 or 12, characterised in that the pin (17) is articulated on a rod (21) arranged orthogonal to the direction of the pivot axis (P), which is situated at a radial distance from said pivot axis, between this pivot axis (P) and the rim (15) of the cup, and an elastic means (22) is provided to apply the pin against the bottom of the indentation.

14. A castor means according to claim 13, characterised in that the elastic means comprises a compression spring (22), in particular disposed coaxially to the pivot axis (P), bearing at one end against a fixed part (9) of the trolley frame, and at its other end against the inner zone of the pin (17).

## Patentansprüche

1. Wagen mit einem Rahmen (2), welcher auf (kleinen) schwenkbaren Rad- oder Rollenvorrichtungen montiert ist, wobei wenigstens zwei Vorrichtungen (3a,3b) an einem ersten Ende des Wagens vorgesehen sind, welche zwei schwenkbaren Rad- oder Rollenvorrichtungen (3a,3b) jeweils beiderseits der mittleren Längsachse des Wagens (1) angeordnet sind, wobei ferner jede Rad- oder Rollenvorrichtung (3a,3b) des ersten Endes ein Blockiermittel (16) für die Schwenkbewegung von Rolle/Rad (6) aufweist, *dadurch gekennzeichnet,* daß das Blockiermittel (16) jedes Rades oder jeder Rolle (6) am ersten Ende des Wagens von unilateraler Wirkung und geeignet ist, das Rad (6) frei in einem Sinne schwenken zu lassen, und zwar gemäß oder mit einer ausreichenden Amplitude, sowie die Schwenkbewegung im anderen Sinne zu blockieren, wobei die Blockierungsrichtungen für die beiden Räder des ersten Endes des Wagens, die beiderseits der mittleren Längsachse des Wagens angeordnet sind, entgegengesetzt sind.

2. Wagen nach Anspruch 1, dadurch gekennzeichnet, daß die schwenkbaren Rad- oder Rollenvorrichtungen (3a,3b), die mit einem Blockierungsmittel (16) mit unilateraler Wirkung versehen sind, die rückwärtigen Rad- oder Rollenvorrichtungen sind, gesehen im normalen Fortbewegungssinn des Wagens.

3. Wagen nach Anspruch 2, bei dem die rückwärtigen Rad- oder Rollenvorrichtungen schwenkbar um eine vertikale Achse montiert sind, die im Vergleich mit der Drehachse des Rades in Längsrichtung nach vorne versetzt oder geneigt ist, dadurch gekennzeichnet, daß das Blockiermittel (16) jedes rückwärtigen Rades geeignet ist, jede Schwenkbewegung des Rades (6) nach außen zu blockieren, und zwar aus der normalen Position der rückwärtigen Räder bei geradliniger Bewegung des Wagens, und geeignet, das Rad frei nach innen schwenken zu lassen, und zwar wenigstens um einen ausreichenden Winkelbereich.

4. Wagen nach einem der voranstehenden Ansprüche, dadurch gekennzeichnet, daß das Blockiermittel mit unilateraler Wirkung (16) jedes Rades (6) vorgesehen ist für eine komplette einfache oder mehrfache Schwenkung des Rades im zulässigen oder freigegebenen Sinne.

5. Wagen nach einem der voranstehenden Ansprüche, dadurch gekennzeichnet, daß das Blockiermittel (16) von unilateraler Wirkung eines Rades (6) einen Finger oder Zapfen (17) umfaßt, der schwenkbar mit dem Rad (6) verbunden und über diesem angeordnet ist, wobei der Finger (17) sich im wesentlichen orthogonal zur Richtung des Drehzapfens (9) erstreckt und geeignet ist, in eine Ausnehmung (19) einzugreifen, die in einem Randbereich (15) einer umgekehrten Schale (14) eingearbeitet ist, die in bezug auf den Rahmen (2) fixiert und über dem Rad gelegen ist, wobei ein Ende (23) der Ausnehmung (19) einen Halteanschlag für den Finger (17) bildet.

6. Wagen nach Anspruch 5, dadurch gekennzeichnet, daß der Boden der Ausnehmung (19) eine Schrägfläche oder Rampe (24) umfaßt, die unter (sich) Entfernen vom Anschlag (23) fortschreitend abfällt, um mit der unteren Kontur (25) des Randbereiches der Schale zusammenzutreffen und die Passage des Fingers zu gestatten.

7. Wagen nach Anspruch 6, dadurch gekennzeichnet, daß der Finger (17) an eine Stange (21) angelenkt ist, die sich orthogonal zur Richtung der Schwenkachse (P) erstreckt und in einem radialen Abstand von dieser Schwenkachse angeordnet ist, und zwar zwischen der Schwenkachse (P) und dem Randbereich (15) der Schale, und daß ein elastisches Mittel (22) vorgesehen ist, um den Finger gegen den Boden der Ausnehmung anzulegen.

8. Wagen nach Anspruch 7, dadurch gekennzeichnet daß, das elastische Mittel durch eine Druckfeder (22) gebildet ist, die insbesondere koaxial zur Schwenkachse (P) plaziert ist und sich mit einem Ende gegen einen Teil (9) legt, der am Rahmen des Wagens fixiert ist, während das andere Ende gegen die innere Zone des Fingers (17) anliegt.

9. Rad- oder Rollenvorrichtung für einen Wagen, insbesondere einen Wagen nach einem der Ansprüche 1 bis 8, welche umfaßt:
- ein Rad (6), welches drehbar um eine Achse (7) montiert ist, die von einer Gabel (8) getragen ist;
- einem Schwenkzapfen (9), der sich senkrecht zu der Achse des Rades erstreckt und in bezug auf diese Achse versetzt oder geneigt ist, wobei die Gabel (8) und das Rad sich um den Schwenkzapfen orientieren können, und
- ein Blockiermittel (16) für die Schwenkbewegung,
dadurch gekennzeichnet, daß das Blockiermittel (16) für die Schwenkbewegung von unilateraler Wirkung und geeignet ist, das Rad (6) in einem Sinne frei schwenken zu lassen, und zwar mit einer ausreichenden Amplitude, und geeignet ist, die Schwenkbewegung im anderen Sinne zu blockieren.

10. Rad- oder Rollenvorrichtung nach Anspruch 9, dadurch gekennzeichnet, daß das Blockiermittel (16) mit unilateraler Wirkung jedes Rades (6) geeignet ist, das Rad im zulässigen oder freigegebenen Sinne komplett für eine oder mehrere Umdrehungen schwenken zu lassen.

11. Rad- oder Rollenvorrichtung nach Anspruch 9 oder 10, dadurch gekennzeichnet, daß das Blockiermittel (16) mit unilateraler Wirkung eines Rades (6) einen Finger (17) umfasst, der mit dem Rad (6) schwenkbar verbunden und oberhalb diesem angeordnet ist, wobei der Finger (17) sich im wesentlichen senkrecht zur Richtung des Schwenkzapfens (9) erstreckt und in eine Ausnehmung (19) eingreifen kann, die in einem Randbereich (15) einer umgekehrten Schale (14) eingearbeitet ist, die in bezug auf den Schwenkzapfen (9) fixiert und über dem Rad angeordnet ist, wobei ein Ende (23) der Ausnehmung (19) einen Halteanschlag für den Finger (17) bildet.

12. Rad- oder Rollenvorrichtung nach Anspruch 11, dadurch gekennzeichnet, daß der Boden der Ausnehmung (19) eine Schrägfläche oder Rampe (24) umfaßt, die, sich entfernend vom Halteanschlag (23), fortschreitend bis zur Vereinigung mit dem unteren Umriß (25) des Randbereichs der Schale abfällt und die Passage des Fingers gestattet.

13. Rad- oder Rollenvorrichtung nach Anspruch 11 oder 12, dadurch gekennzeichnet, daß der Finger (17) an einer Stange (21) angelenkt ist, die sich senkrecht zur Schwenkachse (P) erstreckt und im radialen Abstand von dieser Schwenkachse angeordnet ist, und zwar zwischen der Schwenkachse (P) und dem Randbereich (15) der Schale, und daß ein elastisches Mittel (22) vorgesehen ist, um den Finger gegen den Boden der Ausnehmung anzulegen.

14. Rad- oder Rollenvorrichtung nach Anspruch 13, dadurch gekennzeichnet, daß das elastische Mittel durch eine Druckfeder (22) gebildet ist, die insbesondere koaxial zur Schwenkachse (P) angeordnet ist und mit einem Ende an einem Bereich (9) anliegt, der am Rahmen des Wagens fixiert ist, und mit dem anderen Ende sich gegen eine innere Zone des Fingers (17) legt.
